# EUROPÄISCHE PATENTANMELDUNG

(11) **EP 4 304 077 A1**
(43) Veröffentlichungstag der Anmeldung: **10.01.2024**
(21) Anmeldenummer: 23182941.7
(22) Anmeldetag: 03.07.2023
(51) Int. Cl.: H02P 5/747

(54) **SYSTEM UND VERFAHREN ZUM STARTEN VON MASCHINEN MIT HOHEM TRÄGHEITSMOMENT**

(30) Priorität: 04.07.2022 DE 102022206807
(71) Anmelder: RENK GmbH, 86159 Augsburg (DE)
(72) Erfinder: LÖFFLER, Dan, 86179 Augsburg (DE)
(74) Vertreter: Schlotter, Alexander Carolus Paul

(57) **Zusammenfassung**

Ein Antriebssystem (1) für eine Arbeitsmaschine mit einer zum Starten entlastbaren Arbeitseinrichtung wobei das Antriebssystem wenigstens einen Hauptmotor (2), der als elektrische Maschine, insbesondere als Asynchronmotor, ausgebildet ist und eine Motorwelle; einen Hilfsmotor (3), der als elektrische Maschine, insbesondere als Asynchronmotor ausgebildet ist; und eine Startvorrichtung (4) zum Starten des Hilfsmotors (3), wobei der Hilfsmotor (3) dazu eingerichtet ist, die Arbeitsmaschine anzufahren und/oder zu beschleunigen, insbesondere bis zu einer Synchrondrehzahl des Hauptmotors (2) aufweist.

## Beschreibung

Die vorliegende Erfindung betrifft ein Antriebssystem für Arbeitsmaschinen, sowie ein Verfahren zum Starten und/oder Betreiben einer Arbeitsmaschine.

Das Starten großer Elektromotoren am Netz ist beispielsweise in Zementanlagen oder dergleichen ein technisch herausforderndes Thema. Auch Antriebsmotoren von beispielsweise Vertikalrollenmühlen sind davon betroffen. Das kann auf verschiedene Gründe zurückzuführen sein:
Die Netzstabilität ist bei beispielsweise Zementanlagen in Schwellenländern üblicherweise nicht dauerhaft gewährleistet. Diese Netze sind üblicherweise charakterisiert durch lange Leitungslängen, geringe Kurzschlussleistungen, teilweise Inselnetze mit Dieselgeneratoren und insbesondere schlechte Netzqualität. Ein direktes Zuschalten und Hochfahren von Elektromotoren am Netz würde beispielsweise einen zu großen Spannungseinbruch bewirken.

Deshalb werden in der Zementindustrie üblicherweise weiterhin hauptsächlich Schleifringläufer-Asynchronmotoren mit Flüssigkeitsstarter eingesetzt. Die Rotoren dieser Motortypen sind über Schleifkontakte mit Kathoden in einer Salzbadlösung verbunden. Durch ein Ein- und Ausfahren der Kathoden wird der Rotorwiderstand verändert und die elektrische Kennlinie des Motors verschoben. Diese sind aber problembehaftet.

Aufgabe der vorliegenden Erfindung ist es, ein Antriebssystem für eine Arbeitsmaschine, sowie ein Verfahren zum Betreiben, insbesondere zum Starten,einer Arbeitsmaschine zu verbessern.

Diese Aufgabe wird durch ein Antriebssystem mit den Merkmalen des Anspruchs 1 gelöst. Ansprüche 10 und 11 stellen eine Arbeitsmaschine, respektive ein Verfahren zum Betreiben der Arbeitsmaschine unter Schutz. Die Unteransprüche betreffen vorteilhafte Weiterbildungen.

Hierin werden Ausführungen oder Vorteile von Ausführungen (teilweise) am Beispiel einer Mühle, insbesondere einer Vertikalrollenmühle, eines Extruders oder eines Brechers beschrieben. Dies ist ohne Einschränkung der Allgemeinheit zu verstehen. Insbesondere ist in einer besonders vorteilhaften Anwendung, insbesondere Ausführung, eine Arbeitsmaschine: eine Mühle, insbesondere ein Vertikalrollenmühle, ein Brecher, ein Lüfter oder eine Pumpe, ohne dass die Erfindung in irgendeiner Weise hierauf eingeschränkt ist.

Nach einer Ausführung der vorliegenden Erfindung wird ein Antriebssystem für eine Arbeitsmaschine mit einer zum Starten entlastbaren, insbesondere beim Starten entlasteten Arbeitseinrichtung bereitgestellt. Das Antriebssystem weist in einer Ausführung wenigstens einen Hauptmotor auf, der als elektrische Maschine ausgebildet ist. Ferner weist der wenigstens eine Hauptmotor in einer Ausführung eine Motorwelle auf. Das Antriebssystem weist in einer Ausführung ferner einen Hilfsmotor, der als elektrische Maschine ausgebildet ist, auf. In einer Ausführung weist das Antriebssystem eine Startvorrichtung zum Starten des Hilfsmotors auf. In einer Ausführung ist der Hilfsmotor dazu eingerichtet, die Arbeitsmaschine anzufahren und/oder zu beschleunigen, insbesondere bis zu einer Synchrondrehzahl des Hauptmotors oder bis zumindest im Wesentlichen zu einer Synchrondrehzahl des Hauptmotors.

Der Begriff "entlastbar" wie hierin verwendet soll vorzugsweise als, insbesondere als eine durch Mittel zum Entlasten in der Arbeitseinrichtung der Arbeitsmaschine vorgenommene bzw. vornehmbare, Reduzierung, insbesondere eines Gegenmoments, auf wenigstens 60%, wenigstens 50%, wenigstens 40%, wenigstens 30% und/oder eine Reduzierung auf höchstens 5% eines Nenndrehmoments oder einer Nennlast der Arbeitseinrichtung verstanden werden. In einer Ausführung, insbesondere wenn die Arbeitsmaschine eine Mühle, ein Brecher oder ein Extruder ist, soll "entlastbar", wie hierin verwendet, als Leerfahren der Arbeitseinrichtung verstanden werden, insbesondere durch Mittel zum Entlasten der Arbeitseinrichtung, insbesondere durch einen vorhandenen oder einen anderen, insbesondere zusätzlichen, Hilfsantrieb bzw. Hilfsmotor.

Hierdurch kann in einer Ausführung, insbesondere in Schwellenländern bzw. in Ländern mit Frequenzschwankungen im Stromnetz bzw. instabiler Netzfrequenz, vorteilhafterweise ein Zusammenbrechen des, insbesondere lokalen, Stromnetzes verhindert werden, insbesondere Stromspitzen und/oder Momentenspitzen reduziert werden.

Der Hauptmotor ist in einer Ausführung ein, insbesondere von einem Mittelspannungs-Leistungsschalter geschalteter, Asynchronmotor oder ein Synchronmotor. Der Hilfsmotor ist in einer Ausführung ein Gleichstrommotor, ein Asynchronmotor, ein Reluktanzmotor, ein fremderregter Synchronmotor oder ein permanentmagneterregter Synchronmotor. In einer Ausführung weist das Antriebssystem eine, insbesondere wenigstens eine, der möglichen Kombinationen der zuvor genannten Ausführungen des Hauptmotors und des Hilfsmotors auf.

Eine Startvorrichtung ist in einer Ausführung ein Frequenzumrichter, insbesondere ein Niederspannungsfrequenzumrichter. Die Startvorrichtung ist in einer Ausführung ein Sanftanlauf, insbesondere eine Sterndreieck-Schaltung, ein elektronischer Sanftstarter, oder ein DOL. Eine Arbeitsmaschine ist in einer Ausführung eine Mühle, insbesondere eine Vertikalrollenmühle, ein Brecher, ein Extruder, ein Lüfter, eine Pumpe oder dergleichen, insbesondere mit einem hohen (Anlauf-)Trägheitsmoment, weiter insbesondere (jeweils) mit Mitteln zum Entlasten der Arbeitseinrichtung.

Am Beispiel einer Mühle, insbesondere einer Vertikalrollenmühle, entspricht in einer Ausführung eine entlastbare bzw. entlastete Arbeitseinrichtung einer entlastbaren bzw. entlasteten Mahlvorrichtung, insbesondere wenigstens einer abhebbaren Walze bzw. (wenigstens) einer vom Mahlbett abgehobenen Walze. In einer Ausführung umfasst die Mühle Mittel zum Entlasten der Mahlvorrichtung, insbesondere zum Abheben der wenigstens einen Walze vom Mahlbett. Am Beispiel eines Brechers, insbesondere eines Backenbrechers, entspricht in einer Ausführung eine entlastbare bzw. entlastete Arbeitseinrichtung einer entlasteten Zerkleinerungseinheit, insbesondere einer geöffneten Backe und/oder einer geweiteten bzw. auseinandergefahrenen Brechkammer, insbesondere umfasst der Brecher in einer Ausführung Mittel zum Entlasten der Brechkammer. Hierdurch kann in einer Ausführung ermöglicht werden, dass mittels des Antriebssystems ein (hohes) Trägheitsmoment beim Anfahren einfach(er), insbesondere ein Trägheitsmoment, insbesondere wenn die Arbeitsmaschine eine Vertikalrollenmühle oder ein Extruders ist, von (zumindest im Wesentlichen) wenigstens 100, wenigstens 200, wenigstens 300, wenigstens 400, oder wenigstens 500, und/oder höchstens 2000 kg·m², überwunden werden kann.

In einer Ausführung wird die Arbeitsmaschine bei niedrigen Drehzahlen, insbesondere bei Drehzahlen von (zumindest im Wesentlichen) wenigstens 0, insbesondere mehr als 0, und/oder höchstens 1000 Umdrehungen pro Minute (U/min), betrieben bzw. ist diese betreibbar, insbesondere bei hohen Lastmomenten, insbesondere Lastmomenten wie hierin beschrieben. Insbesondere beziehen sich diese Angaben zu Umdrehungen in einer Ausführung auf die Abtriebsdrehzahl der Arbeitsmaschine bzw. auf eine Drehzahl hinter einem Getriebe, insbesondere des Hauptmotors.

In einer Ausführung wird durch ein Antriebssystem nach einer hierin beschriebenen Ausführung vorteilhafterweise eine Komplexität des Antriebssystems nicht erhöht oder kann in einer Ausführung insbesondere reduziert sein. In einer Ausführung ist ein Antriebssystem vorteilhafterweise weniger komplex als beispielsweise ein Antriebssystem mit einem Schleifringläufermotor, insbesondere als ein Antriebssystem mit einem Schleifringläufermotor mit Bürstenabhebe- und Rotorkurzschlussvorrichtung. In einer Ausführung kann hierdurch ermöglicht werden, dass das Antriebssystem zumindest im Wesentlichen wartungsfrei(er) ist. Ferner kann in einer Ausführung hierdurch das Antriebssystem kostengünstig(er) angeboten bzw. produziert werden. In einer Ausführung ist das Startverhalten des Antriebssystems zumindest im Wesentlichen immer gleich, insbesondere unabhängig von einer Umgebungstemperatur, einer Salzbadkonzentration und/oder eines Kathodenverschleißes. In einer Ausführung kann hierdurch vorteilhafterweise eine geringere Belastung, insbesondere beim Start, des Getriebes und/oder der Arbeitsmaschine erreicht werden, insbesondere durch geringere bzw. verringerte Momentenstöße und/oder Wechselmomente. Ferner kann in einer Ausführung ermöglicht werden, dass das Anlaufverhalten des Antriebssystems vorteilhafterweise verbessert wird, insbesondere im Vergleich mit Systemen, die einen Autotransformator, einen Sanftstarter oder dergleichen einsetzten.

In einer Ausführung kann hierdurch vorteilhafterweise ermöglicht werden, dass eine Startzeit des Antriebssystems verlängert werden kann, insbesondere länger ist als bei einem Antriebssystem mit einem Flüssigkeitsstarter als Startvorrichtung. Hierdurch können in einer Ausführung hohe/höhere Motordrehzahlen umgesetzt werden, insbesondere höhere Motordrehzahlen als die üblicherweise verwendeten 1000 U/min, weiter insbesondere kann eine Erwärmung des Hilfsmotors, insbesondere im Vergleich mit einem Flüssigkeitsstarter als Hilfsmotor, verringert werden, weiter insbesondere ist diese Erwärmung nicht problematisch und/oder begrenzend für die Motordrehzahl beim Hochlaufen des Hilfsmotors. Dies kann in einer Ausführung insbesondere dadurch ermöglicht werden, dass der hierin beschriebene Hilfsmotor mit einer Vorrichtung, insbesondere einem Frequenzumrichter gestartet wird und das Netz zumindest im Wesentlichen kaum belastet bzw. nur geringfügig belastet. In einer Weiterbildung kann hierdurch ermöglicht werden, dass im Vergleich einfache(re), insbesondere weniger komplexe, , Motoren als Haupt- oder Hilfsmotoren verwendet werden können, insbesondere Motoren mit einer niedrig(er)en Polpaarzahl, insbesondere mit einer Polpaarzahl von wenigstens 1, 2 oder 3 und/oder einer Polpaarzahl von höchstens 10. Für diese Weiterbildung weist die Arbeitsmaschine in einer Ausführung ein Getriebe auf, das für eine der höheren Umdrehungszahl entsprechende Übersetzung ausgebildet ist, insbesondere weist in einer Ausführung die Arbeitsmaschine dann Lager auf, die für entsprechend höhere Umfangsgeschwindigkeiten ausgebildet sind. Hierdurch, insbesondere durch eine höhere Nenndrehzahl, ist ein Hilfsmotor und/oder Hauptmotor vorteilhafterweise klein(er), leicht(er), günstig(er) und/oder hat insbesondere einen besseren Wirkungsgrad bzw. Leistungsfaktor.

In einer Ausführung weist der Hilfsmotor wenigsten 1/10 der Leistung des Hauptmotors und/oder höchstens 1/5 der Leistung des Hauptmotors auf. In einer Ausführung weist der Hilfsmotor höchstens 1/6, 1/7, 1/8, 1/9 oder 1/10 und/oder wenigstens 1/20, 1/15 oder 1/10 der Leistung des Hauptmotors auf.

Hierdurch kann in einer Ausführung ermöglicht werden, dass der Hilfsmotor, insbesondere das Antriebssystem, kostengünstig(er) als beispielsweise ein Flüssigkeitsstarter, insbesondere ein Schleifringläufermotor mit Flüssigkeitsstarter ist. Ferner kann in einer Ausführung die Komplexität des Antriebssystems reduziert werden, insbesondere können leichter(e) und/oder kleiner(e) Motoren verwendet werden, als beispielsweise bei dem oben genannten Schleifringläufermotor. Dies kann in einer Ausführung ein Wartungsintervall vergrößern, da insbesondere keine Motorbürsten und/oder Salzbadlösungen gewechselt werden müssen. Ferner kann in einer Ausführung eine thermische Belastung der Komponenten reduziert werden, insbesondere von Stator, Rotor und (in dem hierin beschriebenen Antriebssystem nicht vorhandenen bzw. benötigten) Salzbad. Vorteilhafterweise kann in einer Ausführung hierdurch ermöglicht werden, dass mehr Startvorgänge durchgeführt werden können, insbesondere wegen (deutlich) reduzierter Abkühlzeiten beispielsweise im Vergleich zu Schleifringläufermotoren mit Flüssigkeitsstarter, insbesondere wegen Abkühlzeiten im Bereich von Minuten, insbesondere 10 min oder weniger, auch über mehrere Startvorgänge, insbesondere mehr als 3 Startvorgänge, hinweg. Vorteilhafterweise kann in einer Ausführung auf eine Abkühlzeit verzichtet werden, insbesondere nicht abgekühlt werden. In einer Ausführung kann hierdurch eine Abhängigkeit von der Qualität des Stromnetzes oder sonstigen Netzabhängigkeiten wie insbesondere extern eingebrachten Spannungseinbrüchen, Asymmetrien und/oder langen Kabelwegen reduziert werden.

In einer Ausführung kann der Hilfsmotor eine Leistung von wenigstens 200 kW und/oder höchstens von 400 kW aufweisen, insbesondere wenn der Hauptmotor eine Leistung von wenigstens 2 MW und/oder von höchstens 4 MW aufweist. In einer Ausführung weist der Hauptmotor eine Leistung von wenigstens 2 MW, wenigstens 6 MW und/oder höchstens 7 MW, höchstens 8 MW, höchstens 9 MW, insbesondere wenn die Arbeitsmaschine eine Mühle ist, höchstens 20 MW, höchstens 25 MW, höchstens 30 MW, insbesondere wenn die Arbeitsmaschine ein Extruder ist, auf. In einer Ausführung weist ein Hilfsmotor eine entsprechend an die Leistung des Hauptmotors angepasste Leistung auf, insbesondere wie hierin beschrieben.

In einer Ausführung weist der Hilfsmotor eine Poolpaarzahl von wenigstens 2 und/oder höchstens 10 auf. In einer Ausführung kann der Hilfsmotor, insbesondere bei einer hierin beschriebenen Nenndrehzahl, insbesondere bei einem Nenndrehmoment von wenigstens 1500 Nm und/oder höchstens von 10000 Nm, ein Kippmoment von wenigstens 3000 Nm und/oder höchstens 20000 Nm kurzzeitig, insbesondere für wenigstens 5 Sekunden, aufbringen, insbesondere beim Betrieb des Hilfsmotors an einer als Frequenzumrichter ausgebildeten Startvorrichtung, weiter insbesondere bei einer hierin beschriebenen Leistung.

In einer Ausführung ist der Hauptmotor ein als Kurzschlussläufer ausgeführter Asynchronmotor, ein doppelt gespeister Asynchronmotor oder ein fremderregter oder permanenterregter Synchronmotor. In einer Ausführung ist der Hauptmotor bevorzugt ein Kurzschlussläufer. Hierdurch kann in einer Ausführung das Antriebssystem kostengünstig(er) hergestellt werden, insbesondere wenig(er) komplex. In einer Ausführung kann die Anzahl an (separaten) Hilfsantrieben (Wartung, Anfahren, etc.) reduziert werden.

In einer Ausführung ist der Hilfsmotor an einem zweiten Wellenende oder zwischen dem Hauptmotor und der Arbeitsmaschine oder einem nachfolgenden Getriebe angeordnet. In einer Ausführung erfolgt an einem ersten Wellenende der Motorwelle des Hauptmotors ein Abtrieb, insbesondere auf ein Getriebe, insbesondere einer Arbeitsmaschine, weiter insbesondere auf ein Getriebe einer Mühle, insbesondere Vertikalrollenmühle, eines Brechers, eines Extruders, eines Lüfters oder einer Pumpe. In einer, insbesondere alternativen oder ergänzenden, Ausführung ist der Hilfsmotor über einen mechanischen oder einen hydraulischen Drehmomentwandler und/oder über einen mechanischen oder hydraulischen Drehzahlwandler, insbesondere mit einem (Hilfs-)Getriebe, mit der Motorwelle des Hauptmotors verbunden. In einer Ausführung ist der Hilfsmotor mit der Motorwelle des Hauptmotors über eine Riemenanbindung oder eine Kettenanbindung verbunden. In einer Ausführung kann die Anbindung des Hilfsmotors an die Motorwelle des Hauptmotors eine Übersetzung aufweisen, die nicht 1:1 ist, insbesondere größer 1:1 oder kleiner 1:1 ist.

In einer Ausführung ist der Hilfsmotor für einen Wartungsbetrieb ausgebildet, insbesondere derart, dass der Hilfsmotor mit einer Drehzahl betrieben werden kann bzw. wird, in der eine Wartung des Antriebssystems, insbesondere der Arbeitsmaschine, weiter insbesondere einer Mühle, insbesondere einer Vertikalrollenmühle, durchgeführt werden kann, insbesondere wird. Hierdurch kann ermöglicht werden, dass in einer Ausführung ein Aufschweißen in der Arbeitsmaschine, insbesondere einer Mühle, insbesondere in der Arbeitseinrichtung der Arbeitsmaschine, insbesondere einem Mahlbett einer Mühle, mit dem Hilfsmotor durchgeführt werden kann bzw. wird.

Vorteilhafterweise kann hierdurch in einer Ausführung auf einen (zusätzlichen) Wartungsmotor verzichtet werden, insbesondere dieser Wartungsmotor eingespart werden. Insbesondere weist das Antriebssystem in einer Ausführung keinen (zusätzlichen) Wartungsmotor auf.

In einer Ausführung steht der Hilfsmotor mit einer schaltbaren Kupplung oder einer Überhohlkupplung mit dem Hauptmotor in Wirkverbindung. Die schaltbare Kupplung stellt in einer Ausführung eine Wirkverbindung zwischen Hilfsmotor und dem zweitem Wellenende des Hauptmotors her. In einer Ausführung stellt die Überhohlkupplung eine Drehrichtung frei und stellt in der anderen Drehrichtung eine Wirkverbindung zwischen Hilfsmotor und dem zweiten Wellenende des Hauptmotors her. Hierdurch kann in einer Ausführung vorteilhafterweise der Hilfsmotor vom Hauptmotor entkoppelt werden, insbesondere wenn der Hauptmotor oder die Arbeitsmaschine ihre Solldrehzahl erreicht hat.

In einer Ausführung ist die Startvorrichtung als Frequenzumrichter ausgebildet. Vorteilhafterweise kann der Hilfsmotor wegen seines, insbesondere Frequenzumrichter-, Antriebs in einer Ausführung beim Einsatz im Verbund mit einem Hauptmotor, insbesondere mehreren Hauptmotoren, insbesondere als doppelt gespeiste/r Asynchronmotor(en) ausgebildete/r Hauptmotor(en), betrieben werden.

In einer Ausführung kann der Hilfsmotor vorteilhafterweise abhängig von der benötigten Antriebsleistung an der Startvorrichtung, insbesondere am Frequenzumrichter, insbesondere beim Betrieb der Arbeitsmaschine, weiterbetrieben werden, insbesondere permanent während des Betriebs des Hauptmotors, oder zur Energieeinsparung abgeschaltet werden.

In einer Ausführung weist das Antriebssystem einen Frequenzumrichter auf, insbesondere ist in einer Ausführung die Startvorrichtung des Antriebssystems als Frequenzumrichter ausgebildet, weiter insbesondere ist in einer Ausführung der Frequenzumrichter dazu konfiguriert, einen Sanftanlauf zu ermöglichen, insbesondere derart konfiguriert, dass zusätzlich insbesondere eine Drehzahl des Hilfsmotors (stufenlos) geändert werden kann bzw. wird, insbesondere eingestellt werden kann bzw. wird. Hierdurch können in einer Ausführung im Wesentlichen die gleichen Vorteile (eventuell mit Ausnahme eines Wartungsbetriebs), wie bereits oben beschrieben, erreicht werden.

In einer Ausführung weist das Antriebssystem einen Sanftanlauf auf, insbesondere ist die Startvorrichtung in einer Ausführung als Sanftanlauf ausgebildet. In einer Weiterbildung ist der Sanftanlauf insbesondere als Sterndreieck-Schaltung oder als Sanftanlasser ausgebildet, mit dem der Hilfsmotor gestartet wird bzw. werden kann.

In einer Ausführung ist der Hilfsmotor, insbesondere die Rotor- und/oder Statorwicklungen des Hilfsmotors in das Gehäuse des Hauptmotors integriert. Vorteilhafterweise kann hierdurch in einer Ausführung eine kompakte(re) Bauraumgröße erreicht werden bzw. umgesetzt werden.

In einer Ausführung ist der Hilfsmotor dazu ausgelegt, eine Drehzahl derart anzupassen, dass eine beim Zuschalten des Hauptmotors gültige Synchrondrehzahl für eine im Versorgungsnetz gemessene Netzfrequenz anliegt. Hierdurch kann in einer Ausführung dynamisch auf die Gegebenheiten eines, insbesondere instabilen, Stromnetzes reagiert werden, weiter insbesondere verhindert werden, dass durch das Anfahren der Arbeitsmaschine ein, insbesondere starker, Spannungsabfall, insbesondere durch einen hohen Einschaltstrom bei nicht-synchroner Drehzahl beim Zuschalten, im Stromnetz resultiert.

In einer Ausführung weist der Hauptmotor des Antriebssystems wenigstens zwei unabhängige Wicklungssysteme auf, insbesondere zwei Wicklungssysteme, die jeweils unabhängig voneinander mit dem Stromnetz verbindbar sind bzw. (schaltbar) verbunden sind. Hierdurch kann in einer Ausführung ermöglicht werden, dass beim Ausfall eines Wicklungssystems, zumindest im Wesentlichen mehr als 30%, mehr als 40% oder mehr als 50% der Gesamtantriebsleistung des Antriebssystems, insbesondere zusammen mit der Leistung des Hilfsmotors, zur Verfügung stehen. Hierdurch kann in einer Ausführung ermöglicht werden, dass eine Arbeitsmaschine, insbesondere eine Mühle, weiter insbesondere eine Vertikalrollenmühle, ein Brecher, ein Lüfter und/oder eine Pumpe, noch betreibbar ist, insbesondere betrieben werden kann. In einer Ausführung umfasst eine Schaltanlage zum Schalten des Antriebssystems entsprechend einen weiteren Motorabgang. Diese ist in einer Ausführung vom Antriebssystem umfasst.

In einer Ausführung weist das Antriebssystem wenigstens zwei Hauptmotoren auf, wobei diese insbesondere derart ausgebildet sind, dass eine Gesamtleistung der wenigstens zwei Hauptmotoren (zumindest im Wesentlichen) einer Leistung eines einzelnen Hauptmotors entspricht, mit dem eine Arbeitsmaschine betreibbar ist bzw. betrieben werden kann. In einer Weiterbildung sind die wenigstens zwei Hauptmotoren hintereinander gekoppelt, insbesondere in einer Tandemanordnung, oder über ein Sammelgetriebe, insbesondere Summationsgetriebe, an den Antrieb der Arbeitsmaschine gekoppelt, insbesondere parallel. In einer Ausführung weist jeder der wenigstens zwei Hauptmotoren einen an die jeweilige Motorwelle gekoppelten Hilfsmotor auf. In einer Ausführung mit einer Tandemanordnung weist die Tandemanordnung der wenigstens zwei Hauptmotoren in einer Weiterbildung einen, insbesondere genau einen, Hilfsmotor auf.

In einer Ausführung ist die Arbeitseinrichtung entlastbar, insbesondere derart ausgebildet, dass die Arbeitseinrichtung zum Start des Antriebssystems entlastet ist. In einer Ausführung am Beispiel einer Mühle ist die wenigstens eine Walze der Mühle, insbesondere der Vertikalrollenmühle, von einem Mahlbett abhebbar, insbesondere abgehoben. Hierdurch kann in einer Ausführung ein gering(er)es Losreismoment erreicht werden.

In einer Ausführung weist die Arbeitsmaschine eine langsam aufsteigende Lastkennlinie während des Hochlaufs auf. Hierdurch kann in einer Ausführung vorteilhafterweise ermöglicht werden, dass das System genügend Reserven zum Beschleunigen aufweist, insbesondere ohne den Hilfsmotor zu groß dimensionieren zu müssen, insbesondere im Vergleich mit dem Hauptmotor, vorzugsweise mit einer Leistung, die weniger als 1/5 der Leistung des Hauptmotors entspricht.

Üblicherweise sind "Pony-Motoren" im Stand der Technik bekannt und werden bei üblicherweise langen Standzeiten jeweils für Einzelaufgaben im System verwendet. In einer Ausführung wird der Hilfsmotor für Start-, Dreh- und Wartungsaufgaben der Arbeitsmaschine verwendet bzw. ist dazu eingerichtet, insbesondere in Mühlen, Lüftern, Pumpen oder Brechern, weiter insbesondere bei Vertikalrollenmühlen. Hierdurch können in einer Ausführung zusätzliche bzw. separate Motoren für die jeweiligen Aufgaben eingespart werden.

Nach einer Ausführung der vorliegenden Erfindung wird ein Verfahren zum Betreiben einer Arbeitsmaschine, insbesondere einer Mühle, eines Lüfters, einer Pumpe oder eines Brechers, insbesondere einer Vertikalrollenmühle, bereitgestellt. Die Arbeitsmaschine ist in einer Ausführung mit einem hierin beschriebenen Antriebssystem ausgestattet bzw. weist dieses auf. Das Verfahren weist in einer Ausführung das Entlasten der Arbeitseinrichtung, insbesondere (beispielhaft) bei einer Mühle ein Abheben der wenigstens einen Walze vom Mahlbett, insbesondere das Abheben aller in der Mühle vorhandenen Walzen, auf, oder (beispielhaft) bei einem Brecher das Entlasten einer Brechbacke oder dergleichen, auf. Ferner weist das Verfahren in einer Ausführung das Starten des Antriebssystems auf, bei dem insbesondere mit dem Startvorrichtungs-geregelten, weiter insbesondere dem Frequenzumrichter-geregelten, Hilfsmotor das Antriebssystem angefahren wird, insbesondere ein/der Hauptmotor des Antriebssystems, wenigstens ein Hauptmotor des Antriebssystems oder alle Hauptmotoren des Antriebssystems. In einer Ausführung weist das Verfahren ferner das Zuschalten des Hauptmotors auf, insbesondere bei einer Synchrondrehzahl.

In einer Ausführung kann das Verfahren, insbesondere in einem, insbesondere in einem ersten, Schritt, ein Messen einer Netzfrequenz aufweisen. In einer Weiterbildung kann das Verfahren ferner in einem, insbesondere einem weiteren, Arbeitsschritt das Anpassen der Drehzahl, insbesondere ein dynamisches Anpassen der Drehzahl, aufweisen, so dass insbesondere beim Zuschalten des Hauptmotors die gerade, vorzugsweise zu diesem Zeitpunkt, insbesondere zum Zeitpunkt des Zuschaltens des Hauptmotors, gültige Synchrondrehzahl anliegt.

In einer Ausführung kann das Verfahren, insbesondere während des Betriebs der Arbeitsmaschine, ein Ermitteln einer Belastung des Hauptmotors aufweisen insbesondere durch das Ermitteln eines Hauptmotorstroms, einer Hauptmotorwicklungstemperatur oder eines Antriebsdrehmoments. In einer Weiterbildung kann das Verfahren, insbesondere in einem weiteren Arbeitsschritt, den belastungsabhängigen Start des Hilfsmotors, insbesondere zur Unterstützung des Hauptmotors, aufweisen, sodass das Antriebssystem die geforderte Antriebsleistung aufbringen kann bzw. aufbringt. In einer Ausführung weist das Verfahren ein Zuschalten des Hilfsmotors, insbesondere Starten des Hilfsmotors oder Zuschalten des, insbesondere parallel zum Hauptmotor betriebenen, insbesondere vom Hauptmotor entkoppelt betriebenen, Hilfsmotors basierend auf dem Ermitteln einer Belastung des Hauptmotors auf, insbesondere zur Unterstützung des Hauptmotors.

Hierdurch kann in einer Ausführung vorteilhafterweise ein Hauptmotor, insbesondere bei Lastspitzen oder dauerhaft, entlastet werden.

Hierdurch kann in einer Ausführung vorteilhafterweise mit dem lastabhängigen Start des Hilfsmotors eine Überlastung des Hauptmotors verhindert werden. In einer Ausführung kann ein lastabhängiger Stopp des Hilfsmotors vorteilhafterweise einen Wirkungsgrad des Gesamtantriebs verbessern.

In einer Ausführung kann das Verfahren umfassen, dass der Hilfsmotor in einer Zeitspanne mit einer Dauer von mehr als 0,1 Sekunde und/oder weniger als 2 Sekunden in einen Überlastbetrieb schaltet oder in einer Zeitspanne mit einer Dauer von weniger als 2 Sekunden in einen Betrieb ohne Lastübernahme schaltet, insbesondere auf den Hauptmotor wirkt, während der Hauptmotor bei einer Solldrehzahl betrieben wird, insbesondere basierend auf einem Ermitteln der Belastung des Hauptmotors. Hierdurch kann in einer Ausführung ermöglicht werden, dass der Hilfsmotor korrigierend auf, insbesondere prozessinduzierte, Vibrationen einwirken kann, insbesondere diese verhindern und/oder reduzieren kann. In einer Weiterbildung kann hierdurch ein Aufschaukeln von Vibrationen, insbesondere in der Arbeitsmaschine, reduziert bzw. verringert, insbesondere unterbrochen werden.

Nach einer Ausführung der vorliegenden Erfindung ist ein System, insbesondere hard- und/oder software-, insbesondere programmtechnisch, zur Durchführung eines hier beschriebenen Verfahrens eingerichtet.

Das Antriebssystem, insbesondere die Arbeitsmaschine weist in einer Ausführung Mittel zum Entlasten der Arbeitseinrichtung, insbesondere, wenn es sich bei der Arbeitsmaschine um eine Mühle, insbesondere eine Vertikalrollenmühle, handelt, Mittel zum Abheben der wenigstens einen Walze auf.

Nach einer Ausführung der vorliegenden Erfindung weist ein bzw. das System auf: Mittel zum Starten des Antriebssystems, insbesondere mittels des mit der Startvorrichtung geregelten Hilfsmotors; und Mittel zum Zuschalten des Hauptmotors bei Synchrondrehzahl.

In einer Ausführung weist das System bzw. sein(e) Mittel auf: Mittel zum Messen einer Netzfrequenz, insbesondere eine (Daten-)Schnittstelle zum Empfangen oder Abfragender eines Werts für die Netzfrequenz, Mittel zum Anpassen einer Drehzahl, insbesondere zum dynamischen Anpassen einer Drehzahl, so dass beim Zuschalten des Hauptmotors zumindest im Wesentlichen die gerade gültige Synchrondrehzahl anliegt.

Ein System und/oder ein Mittel im Sinne der vorliegenden Erfindung kann hard- und/oder softwaretechnisch ausgebildet sein, insbesondere wenigstens eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einer (Daten-)Schnittstelle bzw. einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Mühle betreiben bzw. überwachen kann.

Ein Computerprogrammprodukt kann in einer Ausführung ein, insbesondere computerlesbares und/oder nicht-flüchtiges, Speichermedium zum Speichern eines Programms bzw. von Anweisungen bzw. mit einem darauf gespeicherten Programm bzw. mit darauf gespeicherten Anweisungen aufweisen, insbesondere sein. In einer Ausführung veranlasst ein Ausführen dieses Programms bzw. dieser Anweisungen durch ein System bzw. eine Steuerung, insbesondere einen Computer oder eine Anordnung von mehreren Computern, das System bzw. die Steuerung, insbesondere den bzw. die Computer, dazu, ein hier beschriebenes Verfahren bzw. einen oder mehrere seiner Schritte auszuführen, bzw. sind das Programm bzw. die Anweisungen hierzu eingerichtet.

In einer Ausführung werden ein oder mehrere, insbesondere alle, Schritte des Verfahrens vollständig oder teilweise automatisiert durchgeführt, insbesondere durch die Steuerung bzw. ihr(e) Mittel.

Weitere Vorteile und Merkmale ergeben sich aus den Unteransprüchen und den Ausführungsbeispielen. Hierzu zeigt, teilweise schematisiert:
Fig. 1: ein Antriebssystem nach einer Ausführung der vorliegenden Erfindung;
Fig. 2: ein Verfahren nach einer Ausführung der vorliegenden Erfindung; und
Fig. 3: ein Antriebssystem nach einer Ausführung der vorliegenden Erfindung.

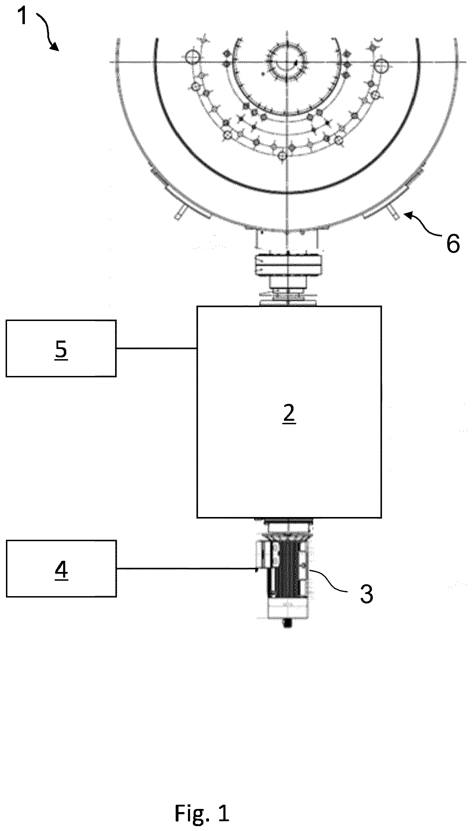

Figur 1 zeigt schematisch ein Antriebssystem 1 wie in Ausführungen hierin beschrieben. Das Antriebssystem 1 weist einen Hauptmotor 2, der über einen Mittelspannungs-Leistungsschalter 5 geschaltet werden kann bzw. wird, auf. Ferner ist ein Hilfsmotor 3 gezeigt, der an einem zweiten Ende der Welle des Hauptmotors 1 angeordnet ist, dargestellt. Der gezeigte Hilfsmotor 3 wird von einem Frequenzumrichter 4 drehzahlvariabel angesteuert bzw. betrieben. Das erste Wellenende ist hier an ein Getriebe 6 einer Mühle gekoppelt, bzw. mit dieser wirkverbunden.

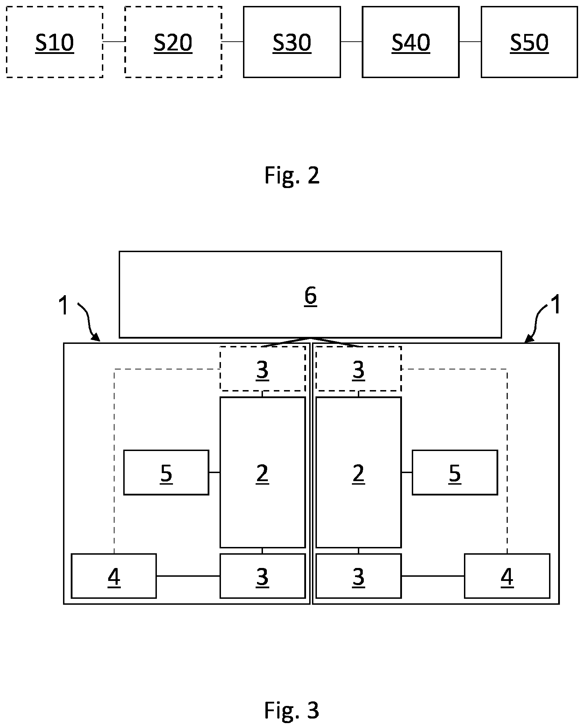

Figur 2 zeigt schematisch ein Verfahren mit den Arbeitsschritten S10 bis S50. In einem Schritt S10 kann, vorzugsweise optional (durch die Strichelung dargestellt) eine Netzfrequenz gemessen werden. Entsprechend der gemessenen Netzfrequenz kann in einem weiteren, insbesondere optionalen Schritt S20 (ebenfalls durch Strichelung dargestellt) eine (Soll-)Drehzahl derart angepasst werden, vorzugsweise dynamisch, dass beim Zuschalten des Hauptmotors S50 (zumindest im Wesentlichen) die gerade gültige Synchrondrehzahl anliegt. In einem weiteren Schritt S30 wird die wenigstens eine Arbeitseinrichtung der Arbeitsmaschine, vorzugsweise alle Arbeitseinrichtungen der Arbeitsmaschine entlastet. In einem Schritt S40 wird nach dem Entlasten der Arbeitseinrichtung der Arbeitsmaschine, vorzugsweise aller Arbeitseinrichtungen, das Antriebssystem, vorzugsweise der Hilfsmotor gestartet, mittels der Startvorrichtung 4. Der Hauptmotor wird in einem Schritt S50 zugeschaltet, wenn zumindest im Wesentlichen eine Synchrondrehzahl erreicht ist.

Figur 3 zeigt schematisch ein Antriebssystem 1 wie in Ausführungen hierin beschrieben. Das Antriebssystem 1 weist mehrere, hier vorzugsweise zwei, Hauptmotoren 2, die hier vorzugsweise über einen Mittelspannungs-Leistungsschalter 5 geschaltet werden können, auf. Ferner ist jeweils ein Hilfsmotor 3 gezeigt, der an einem zweiten Ende der Welle des Hauptmotors 1 angeordnet ist, dargestellt. In gestrichelt ist jeweils ein Hilfsmotor in einer alternativen Anordnung am ersten Wellenende der Welle der Hauptmotoren 1 gezeigt. Die gezeigten Hilfsmotoren 3 werden von einer Startvorrichtung 4 drehzahlvariabel angesteuert bzw. betrieben. Das erste Wellenende der Hauptmotoren 2 ist jeweils schematisch an ein Getriebe 6 einer Mühle gekoppelt, bzw. mit dieser wirkverbunden, beispielsweise über ein Summationsgetriebe (nicht dargestellt).

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Antriebssystem
- 2: Hauptmotor
- 3: Hilfsmotor
- 4: Startvorrichtung
- 5: Mittelspannungs-Leistungsschalter
- 6: Getriebe
- S10: Messen einer Netzfrequenz
- S20: Anpassen der Drehzahl
- S30: Abheben der Walze(n)
- S40: Starten des Antriebssystems/Hilfsmotors
- S50: Zuschalten des Hauptmotors

## Patentansprüche

1. Antriebssystem (1) für eine Arbeitsmaschine mit einer zum Starten entlastbaren Arbeitseinrichtung wobei das Antriebssystem folgendes aufweist:
wenigstens einen Hauptmotor (2), der als elektrische Maschine, insbesondere als Asynchronmotor, ausgebildet ist und eine Motorwelle aufweist;
einen Hilfsmotor (3), der als elektrische Maschine, insbesondere als Asynchronmotor ausgebildet ist; und
eine Startvorrichtung (4) zum Starten des Hilfsmotors (3),
wobei der Hilfsmotor (3) dazu eingerichtet ist, die Arbeitsmaschine anzufahren und/oder zu beschleunigen, insbesondere bis zu einer Synchrondrehzahl des Hauptmotors (2).

2. Antriebssystem nach dem vorhergehenden Anspruch, **dadurch gekennzeichnet, dass** der Hilfsmotor (3) wenigsten 1/10 der Leistung des Hauptmotors (2) und/oder höchstens 1/5 der Leistung des Hauptmotors (2) aufweist.

3. Antriebssystem nach einem der vorhergehenden Ansprüche, **dadurch gekennzeichnet, dass** der Hauptmotor (2) ein Kurzschlussläufer, ein, insbesondere doppelt gespeister, Asynchronmotor, ein fremderregter Synchronmotor oder ein permanentmagneterregter Synchronmotor ist.

4. Antriebssystem nach einem der vorhergehenden Ansprüche, **dadurch gekennzeichnet, dass** an einem ersten Wellenende der Motorwelle ein Abtrieb erfolgt und der Hilfsmotor (3) am zweiten Wellenende angeordnet ist, parallel zum Hauptmotor oder zwischen dem Hauptmotor (2) und einem nachfolgenden Getriebe (6) angeordnet ist.

5. Antriebssystem nach einem der vorhergehenden Ansprüche, **dadurch gekennzeichnet, dass** der Hilfsmotor (3) für einen Wartungsbetrieb ausgebildet ist, insbesondere verwendet wird.

6. Antriebssystem nach einem der vorhergehenden Ansprüche, **dadurch gekennzeichnet, dass** der Hilfsmotor (3) mittels einer schaltbaren Kupplung oder einer Freilaufkupplung mit dem Hauptmotor (2) in Wirkverbindung steht.

7. Antriebssystem nach einem der vorhergehenden Ansprüche, **dadurch gekennzeichnet, dass** die Startvorrichtung (4) als Sterndreieck-Schaltung ausgebildet ist und der Hilfsmotor (3) mit der Sterndreieck-Schaltung gestartet wird, insbesondere ein Startstrom des Antriebssystems reduziert wird.

8. Antriebssystem nach einem der vorhergehenden Ansprüche 1 bis 6, **dadurch gekennzeichnet, dass** der Hilfsmotor (3) mittels der Startvorrichtung (4), wobei die Startvorrichtung insbesondere als Frequenzumrichter ausgebildet ist, dazu ausgelegt ist, eine Drehzahl derart anzupassen, dass eine beim Zuschalten eines Hauptmotors (2) gültige Synchrondrehzahl für die im Versorgungsnetz gemessene Netzfrequenz anliegt.

9. Antriebssystem nach einem der vorhergehenden Ansprüche, **dadurch gekennzeichnet, dass** der Hauptmotor (2) wenigstens zwei unabhängige Wicklungssysteme aufweist, insbesondere zwei unabhängige Wicklungssysteme, die jeweils voneinander unabhängig mit dem Stromnetz verbindbar sind.

10. Antriebssystem nach einem der vorhergehenden Ansprüche, **dadurch gekennzeichnet, dass** das Antriebssystem genau einen Hauptmotor oder wenigstens zwei, alternativ oder ergänzend höchstens 10 Hauptmotoren aufweist, wobei die vorhandenen Hauptmotoren jeweils voneinander unabhängig mit dem Stromnetz verbindbar sind.

11. Arbeitsmaschine, insbesondere Vertikalrollenmühle, wobei die Arbeitsmaschine aufweist:
ein Antriebssystem nach einem der vorhergehenden Ansprüche; und
eine Arbeitseinrichtung;
wobei die Arbeitsmaschine dazu ausgelegt ist die wenigstens eine Arbeitseinrichtung zu entlasten.

12. Verfahren zum Betreiben einer Arbeitsmaschine, insbesondere einer Vertikalrollenmühle, mit einem Antriebssystem nach einem der vorhergehenden Ansprüche 1 bis 10, insbesondere einer Arbeitsmaschine nach dem vorhergehenden Anspruch, **dadurch gekennzeichnet, dass** das Verfahren aufweist:
- Entlasten der wenigstens einen Arbeitseinrichtung;
- Starten des Antriebssystems mit dem Startvorrichtungs-geregelten Hilfsmotor (3); und
- Zuschalten des Hauptmotors (2) bei Synchrondrehzahl.

13. Verfahren nach dem vorhergehenden Anspruch, **dadurch gekennzeichnet, dass** das Verfahren, insbesondere in einem ersten Schritt, ferner aufweist:
- Messen einer Netzfrequenz;
- Anpassen der Drehzahl, insbesondere dynamisch, so dass beim Zuschalten des Hauptmotors (2) die gerade gültige Synchrondrehzahl anliegt.

14. Verfahren nach einem der vorhergehenden Ansprüche 12 oder 13, **dadurch gekennzeichnet, dass** der Hilfsmotor (3) in einer Zeitspanne mit einer Dauer von weniger als 2 Sekunden in einen Überlastbetrieb schaltet oder in einer Zeitspanne mit einer Dauer von weniger als 2 Sekunden in einen Betrieb ohne Lastübernahme schaltet, während der Hauptmotor (2) bei einer Solldrehzahl betrieben wird oder dass der Hilfsmotor (3) parallel zum Hauptmotor (2) gestartet und/oder betrieben wird, insbesondere basierend auf einer ermittelten Belastung des Hauptmotors (2).

15. Verfahren nach einem der vorhergehenden Ansprüche 12 bis 14, **dadurch gekennzeichnet, dass** der Hilfsmotor (3) mit dem Hauptmotor (2) weiter betrieben wird, insbesondere permanent während des Betriebs des Hauptmotors (2).
